# EUROPÄISCHE PATENTANMELDUNG

(11) **EP 1 787 843 A2**
(43) Veröffentlichungstag der Anmeldung: **23.05.2007**
(21) Anmeldenummer: 06023498.6
(22) Anmeldetag: 11.11.2006
(51) Int. Cl.: B60J 7/20

(54) **Fahrzeug mit einem verstellbaren Fahrzeugdach**

(30) Priorität: 18.11.2005 DE 102005055583
(71) Anmelder: Magna Car Top Systems GmbH, 74321 Bietigheim-Bissingen (DE)
(72) Erfinder: Halbweiss, Thomas, Dipl.-ing., 71686 Remseck (DE); Koschien, Robert, Dipl.-Ing., 73760Ostfildern (DE)

(57) **Zusammenfassung**

Die Erfindung betrifft ein Fahrzeug mit einem verstellbaren Fahrzeugdach (1) mit mindestens einem starren Dachteil (2, 3, 4), das über eine Dachkinematik (9) mit mindestens einem Lenker (11, 12) gelenkig an die Fahrzeugkarosserie (10) angebunden und mittels der Dachkinematik (9) zwischen einer Schließposition und einer Ablageposition verstellbar ist. Erfindungsgemäß ist vorgesehen, dass der Lenker (11, 12) der Dachkinematik (9) bei der Verstellung des Dachteils (2, 3, 4) von der Ablageposition in die Schließposition von außerhalb des Fahrzeugs her in Richtung auf die in Fahrtrichtung linke Fahrzeugseite schauend betrachtet um eine in Fahrzeugquerrichtung verlaufende Drehachse (27, 28) im Uhrzeigersinn verschwenkbar ist.

## Beschreibung

Die Erfindung betrifft ein Fahrzeug mit einem verstellbaren Fahrzeugdach mit mindestens einem starren Dachteil gemäß dem Oberbegriff des Anspruches 1.

Solche Cabriolet- oder TARGA-Fahrzeuge sind hinlänglich in den verschiedensten Ausführungsformen bekannt. So beschreibt beispielsweise die DE 195 16 877 C1 ein Hardtop-Fahrzeug mit zwei starren Dachteilen, die über eine Viergelenkkinematik an der Fahrzeugkarosserie angebunden sind. In der Ablageposition befinden sich die Dachteile in einem Verdeckkasten, der mittels eines verschwenkbar gelagerten Verdeckkastendeckels verschließbar ist. Nachteilig bei dem bekannten Fahrzeugdach ist es, dass der Verdeckkastendeckel geöffnet werden muss, um Platz für die Verstellbewegung der Dachteile zwischen der Schließposition und der Ablageposition zu schaffen. Hierzu ist der Verdeckkastendeckel mit einem als Rohrrahmen ausgebildeten Hilfsrahmen versehen, an dem eine komplizierte Verstellkinematik angreift. Neben der Öffnungsstellung, die ein Verschwenken der Dachteile ermöglicht, ist der Verdeckkastendeckel zusätzlich in eine so genannte Beladehilfsstellung verschwenkbar, wodurch der Verdeckkasten als herkömmlicher Kofferraum mit nach hinten aufgeklapptem Heckdeckel genutzt werden kann.

Aus der DE 103 16 027 A1 ist ebenfalls ein Hardtop-Fahrzeugdach bekannt. Das bekannte Fahrzeugdach besteht aus drei starren Dachteilen, wobei das mittlere Dachteil über eine Viergelenkkinematik an der Fahrzeugkarosserie angebunden ist. Das vordere und das hintere Dachteil sind über jeweils eine Relativkinematik mit dem mittleren Dachteil verbunden. In der Ablageposition bilden die drei Dachteile ein Dachteilpaket, welches in einem Verdeckkasten ablegbar ist. Auch bei diesem Hardtop-Fahrzeug ist es notwendig, den Verdeckkastendeckel zu öffnen, um die Dachteile zwischen ihren Endpositionen verschwenken zu können.

Der Erfindung liegt die Aufgabe zugrunde, ein Fahrzeug mit einem Fahrzeugdach vorzuschlagen, bei dem der den Verdeckkasten überdeckende Verdeckkastendeckel bei einer Verschwenkbewegung des Dachteils zwischen seinen Endpositionen nicht notwendigerweise geöffnet werden muss.

Diese Aufgabe wird mit den Merkmalen des Anspruchs 1 gelöst. Vorteilhafte Ausgestaltungen der Erfindung sind in den Unteransprüchen angegeben.

Der Erfindung liegt der Gedanke zugrunde, die Drehrichtung zumindest eines Lenkers der Dachkinematik im Vergleich zu konventionellen Dachkinematiken zu invertieren. Betrachtet man die in Fahrtrichtung linke Fahrzeugseite, also in Deutschland die Fahrerseite, von einer Position außerhalb des Fahrzeugs her, so wird erfindungsgemäß der zumindest eine Lenker der Dachkinematik in Bezug auf diese Position um eine in Fahrzeugquerrichtung verlaufende Drehachse bei einer Verschwenkung des Dachteils von der Schließposition in die Ablageposition im Gegenuhrzeigersinn verschwenkt. Dabei vollführt das Dachteil eine S-förmige Bewegung. Das Dachteil wird aufgrund der erfindungsgemäßen, alternativen Bauform nicht entlang einer Bewegungsbahn verschwenkt, die oberhalb der Anlenkpunkte der Dachkinematik an die Fahrzeugkarosserie verläuft, sondern folgt stattdessen einer Bewegungsbahn, die unterhalb dieser Anlenkpunkte angeordnet ist.

Führt man ein Koordinatensystem ein, bei dem die X-Achse in Fahrtrichtung weist, die Z-Achse die Hochachse bildet und die Y-Achse im rechten Winkel zu den beiden Achsen in Fahrzeugquerrichtung verläuft, so verschwenkt erfindungsgemäß mindestens ein Lenker der Dachkinematik in negativer Y-Richtung gesehen bei der Bewegung des Daches von der Ablageposition in die Schließposition im Uhrzeigersinn.

Aufgrund der Erfindung können die Lenker der Dachkinematik kürzer und damit steifer ausgebildet werden, als die Lenker bekannter Dachkinematiken, da der zurückzulegende Weg von der Schließposition in die Ablageposition bei der erfindungsgemäßen Bauform kürzer ist, als bei herkömmlichen Bauformen. Die Forderung nach der Nichtsichtbarkeit der Lenker ist mit den kurzen Lenkern wesentlich leichter realisierbar. Zusätzlich ergibt sich der Vorteil der Gewichtsreduktion durch die kürzeren und damit leichteren Lenker der Dachkinematik.

Die Erfindung ist ausdrücklich nicht auf Fahrzeuge mit einem Verdeckkasten und/oder Verdeckkastendeckel beschränkt. Es ist beispielsweise denkbar, dass der Verdeckkastendeckel von dem zuoberst abgelegten Dachteil gebildet wird.

Für den Fall, dass das Fahrzeug jedoch einen Verdeckkastendeckel aufweist, ergeben sich aufgrund der erfindungsgemäßen Bauform entscheidende Vorteile. Aufgrund der sich durch die inverse Anordnung der Lenker ergebende, inverse Ablagebewegung ist es möglich, dass der Verdeckkastendeckel während der Verstellbewegung des Dachteils geschlossen bleibt. Der Verdeckkastendeckel kann also beispielsweise als starres, unbewegliches Karosserieteil, insbesondere aus Blech, ausgeführt werden. Zusätzlich kann bei Bedarf ein heckseitig dieses unbeweglichen Verdeckkastendeckels angeordneter, verschwenkbarer Kofferraumdeckel vorgesehen werden, über den der Ablageraum der Dachteile oder ein separater heckseitiger Kofferraum zu be- und entladen ist.

Alternativ ist es möglich, den Verdeckkastendeckel mit einem einzigen Öffnungsmechanismus zu versehen, der eine Öffnung des Verdeckkastendeckels in eine Beladehilfsstellung ermöglicht, also in eine Stellung, in der der Verdeckkastendeckel mit der Fahrzeuglängsachse einen sich in Richtung Fahrzeugheck vergrößernden Winkel einschließt. Beispielsweise kann der Verdeckkastendeckel hierzu mit seinem in Fahrtrichtung vorderen Ende über Drehgelenke an der Fahrzeugkarosserie angelenkt werden.

Allen diesen Ausführungsformen ist gemein, dass bei dem Verdeckkastendeckel auf einen Hilfsrahmen, insbesondere einen Rohrrahmen, verzichtet werden kann.

In Weiterbildung der Erfindung ist vorgesehen, dass das Dachteil oder andere an dem Dachteil angelenkte Dachteile zumindest teilweise im Bereich der hinteren Sitzreihe ablegbar sind. Hierdurch ist die Erfindung beispielsweise auch bei zweisitzigen Cabriolets mit Notsitzen realisierbar. Das Package bzw. das Dachteil kann dann zumindest teilweise im Bereich der Notsitze abgelegt werden.

Es gibt verschiedene Möglichkeiten, den Lenker am hinteren Dachteil anzulenken. Es hat sich als vorteilhaft erwiesen, den Lenker an der Unterseite des Dachteils, insbesondere an der C-Säule anzulenken. Hierdurch ist der Lenker besonders gut sichtgeschützt. Idealerweise folgt die Anlenkung über eine dachteilfeste Konsole. Damit der Lenker die Verstellbewegung des Dachteils zwischen den Endpositionen nicht behindert, ist es von Vorteil, den Lenker zumindest einenends in Richtung Fahrzeugaußenseite zu kröpfen. Es ist theoretisch auch denkbar, in dem Dachteil einen Schlitz vorzusehen, so dass der Lenker ein Stück weit durch das Dachteil hindurchtauchen kann. Diese Ausführungsform hat allerdings den Nachteil, dass der Schlitz in Schließposition geschlossen werden muss. Ebenfalls ist es denkbar, den Lenker an der Seite des Dachteils anzulenken. Dabei sollte der Lenker in Schließposition jedoch durch geeignete Maßnahmen sichtgeschützt werden.

In Ausgestaltung der Erfindung ist vorgesehen, dass an dem Dachteil mindestens ein weiteres Dachteil mittels einer Relativkinematik angelenkt ist. Vorzugsweise sind insgesamt drei starre Dachteile vorgesehen, von denen zumindest ein Dachteil über die invers arbeitende Dachkinematik an der Fahrzeugkarosserie angebunden ist.

Aus Verstauraumgründen ist es von Vorteil, wenn die Dachteile mittels der Relativkinematiken zu einem Dachteilpaket verstellt werden können. Dabei ist es von Vorteil, wenn das gelenkig mit der Fahrzeugkarosserie verbundene Dachteil zuunterst im Dachteilpaket abgelegt wird. Im Dachteilpaket liegen die Dachteile zumindest näherungsweise parallel übereinander.

Die Lenker der Dachkinematik können besonders kurz und damit leicht ausgebildet werden, wenn das in Schließposition hintere Dachteil gelenkig mit der Karosserie verbunden wird. Dabei sollte das hintere Dachteil in Ablageposition zuunterst mit nach oben gerichteter Dachteilaußenseite abgelegt werden. Es ist jedoch auch vorstellbar, dass das hintere Dachteil bei dem Vorsehen von insgesamt drei Dachteilen an mittlerer oder oberster Position im Dachteilpaket abgelegt ist.

In Weiterbildung der Erfindung ist vorgesehen, dass das Dachteil bzw. die Dachteile derart abgelegt werden, dass eines der Dachteile, vorzugsweise das vordere Dachteil, in Ablageposition die Funktion einer Hutablage übernimmt. Falls ein Verdeckkasten vorgesehen ist, muss also zumindest ein Dachteil aus diesem Verdeckkasten herausragen oder diesen Abdecken und die Position einer Hutablage einnehmen. Hierdurch kann auf eine spezielle Hutablagekinematik verzichtet werden. Zusätzlich kann eine separate Hutablage in Schließposition vorgesehen werden. Diese in Fahrzeugquerrichtung verlaufende Hutablage ist mit Vorteil fest, insbesondere drehfest, mit dem hinteren Dachteil, vorzugsweise mit der Konsole zur Befestigung der Lenker der Dachkinematik, verbunden. Diese separate Hutablage wird zusammen mit dem an der Karosserie angebundenen Dachteil abgelegt und vorzugsweise durch ein Dachteil in Ablageposition ersetzt.

Es ist zweckmäßig, als Dachkinematik eine Mehrgelenkkinematik mit mindestens zwei Lenkern, insbesondere eine Viergelenkkinematik vorzusehen, wobei sämtliche, insbesondere beide, Lenker der Mehrgelenkkinematik bei der Verstellung des Dachteils zwischen den Endlagen jeweils in die gleiche Richtung verschwenken. Mindestens ein Lenker der Mehrgelenkkinematik, vorzugsweise sämtliche Lenker, sollten mit ihrem in Ablageposition oberen Ende an der Fahrzeugkarosserie angelenkt sein.

Aus Kosten- und Gewichtsgründen ist es von Vorteil, wenn ein Lenker der Viergelenkkinematik, vorzugsweise der in Fahrtrichtung hintere Lenker, gerade ausgebildet ist. Dabei sollte dieser Lenker an der Unterseite des Dachteils angelenkt sein.

Zusätzlich oder alternativ ist vorgesehen, dass ein Lenker der Viergelenkkinematik, insbesondere der vordere Lenker, in Fahrzeugquerrichtung zur Fahrzeugaußenseite hin gekröpft ausgebildet ist, um Freiraum für die Verschwenkung des Dachteils relativ zu diesem Lenker bereitzustellen.

Weitere Vorteile und zweckmäßige Ausführungen sind den weiteren Ansprüchen, der Figurenbeschreibung und den Zeichnungen zu entnehmen. Es zeigen:
- Fig. 1: ein dreiteiliges Hardtop-Fahrzeugdach in Schließposition,
- Fig. 2: das Hardtop-Fahrzeugdach gemäß Fig. 2 in einer Zwischenposition während der Verstellbewegung zwischen Schließposition und Ablageposition,
- Fig. 3: das Hardtop-Fahrzeugdach gemäß Fig. 1 und 2 in einer Zwischenposition während der Verstellbewegung, in der die Dachteile bereits ein Dachteilpaket bilden,
- Fig. 4: das Hardtop-Fahrzeugdach gemäß Fig. 1 bis Fig. 3 in Ablageposition in einer Seitenansicht,
- Fig. 5: das Hardtop-Fahrzeugdach gemäß Fig. 5, in einer Ansicht von unten,
- Fig. 6: die als Viergelenkkinematik ausgebildete Dachkinematik des Hardtop-Fahrzeugdaches in Schließposition,
- Fig. 7: die Dachkinematik in Schließposition in einer Ansicht von hinten unten,
- Fig. 8: die Dachkinematik in Schließposition in einer Ansicht von seitlich unten, und
- Fig. 9: die Dachkinematik in Schließposition in einer Ansicht von vorne unten.

In den Figuren sind gleiche Bauteile und Bauteile mit gleicher Funktion mit dem gleichen Bezugszeichen gekennzeichnet.

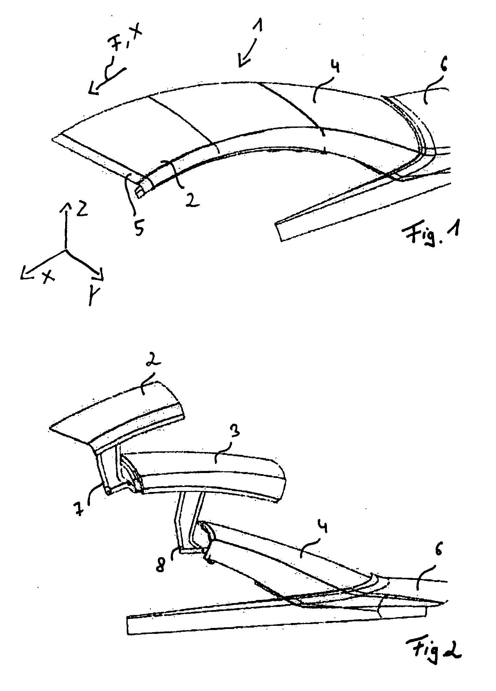

In Fig. 1 ist ein Fahrzeugdach 1 dargestellt. Mit F ist die Fahrtrichtung angegeben. Das Fahrzeugdach 1 weist drei starre Dachteile auf, nämlich ein vorderes Dachteil 2, ein mittleres Dachteil 3 und ein hinteres Dachteil 4. In der in Fig. 1 gezeigten Schließposition sind die drei Dachteile 2, 3, 4 in Fahrtrichtung F hintereinander angeordnet, wobei das vordere Dachteil 2 mit einem in Fahrzeugquerrichtung verlaufenden Windschutzscheibenrahmen 5 verriegelt ist. Heckseitig am Fahrzeug ist ein Verdeckkastendeckel 6 zu erkennen.

Wie insbesondere aus Fig. 2 ersichtlich ist, ist das vordere Dachteil 2 an dem mittleren Dachteil 3 über eine als Viergelenk ausgebildete Relativkinematik 7 angelenkt. Das mittlere Dachteil 3 wiederum ist gelenkig über eine ebenfalls als Viergelenkkinematik ausgebildete Relativkinematik 8 mit dem hinteren Dachteil 4 verbunden.

In Fig. 3 sind die Dachteile 2, 3, 4 mittels der Relativkinematiken 7, 8 zu einem Dachteilpaket verstellt, in dem die Dachteile 2, 3, 4 übereinander und parallel zueinander angeordnet sind. Alle Dachteile 2, 3, 4 sind gleichsinnig mit nach oben gerichteter Dachaußenseite im Dachteilpaket zusammengefügt. Das vordere Dachteil 2 ist oberhalb des mittleren Dachteils 3 angeordnet, welches sich wiederum oberhalb des hinteren Dachteils 4 befindet.

Wie sich insbesondere aus Fig. 4 ergibt, ist das hintere Dachteil über eine als Viergelenkkinematik ausgebildete Dachkinematik 9 an der Fahrzeugkarosserie 10 angebunden. Die Dachkinematik 9 umfasst einen vorderen Lenker 11 und einen hinteren Lenker 12, die einenends gelenkig mit der Fahrzeugkarosserie 10 und anderenends mit einer Konsole 13 des hinteren Dachteils 4 gelenkig verbunden sind. Die gelenkige Anbindung an der Konsole 13 erfolgt über jeweils ein Drehgelenk 14, 15.

In Fig. 4 ist die in Fahrtrichtung gesehen linke Dachkinematik aus einer Ansicht von in Fahrtrichtung links außerhalb des Fahrzeugs dargestellt. Die dargestellte Fahrzeugseite entspricht in Deutschland der Fahrerseite. In dieser Ansicht werden beide Lenker 11, 12 der Dachkinematik 9, bei der Verschwenkung von der in Fig. 4 dargestellten Ablageposition in die in Fig. 1 dargestellte Schließposition über die Zwischenpositionen gemäß den Fig. 3 und 2 um die karosseriefesten Drehgelenke im Uhrzeigersinn verschwenkt. Die Dachteile 2, 3, 4 werden also von der dargestellten unteren Position nach links oben im Uhrzeigersinn verschwenkt. Die Bewegungsbahn der Dachteile 2, 3, 4 von der in Fig. 3 dargestellten Zwischenposition in die in Fig. 4 dargestellte Ablageposition ist in Fig. 3 durch den S-förmigen Pfeil 16 symbolisiert. Die Dachteile 2, 3, 4 werden nicht oben herum, sondern unten herum an den karosseriefesten Drehgelenken des vorderen und des hinteren Lenkers 11, 12 der Dachkinematik 9 vorbeigeschwenkt. Der Verdeckkastendeckel 6 muss bei dieser Verschwenkbewegung nicht verstellt werden, sondern kann starr in seiner in den Fig. 1 bis 4 dargestellten Position verharren. Es ist denkbar, den Verdeckkastendeckel 6 als unbewegliches Karosserieteil auszubilden. Ebenso ist es denkbar, den Verdeckkastendeckel 6 wie einen herkömmlichen Kofferraum zur Beladung des Verdeckkastens 17 heckseitig zu öffnen. Ebenso ist es denkbar, vollkommen auf einen Verdeckkastendeckel 6 zu verzichten.

In den Fig. 1, 4 und 6 ist ein Koordinatensystem mit den Achsen X, Y, und Z eingezeichnet. Die X-Achse verläuft in Fahrtrichtung. Die Z-Achse ist die Hochachse. Die Y-Achse verläuft in Querrichtung und durchstößt vom Fahrzeuginneren her die in Fahrtrichtung linke Fahrzeugseite. Erfindungsgemäß verschwenken die Lenker 11, 12 der Dachkinematik 9 bei der Bewegung des Dachteils 4 von der Ablageposition in die Schließposition in positiver Y-Richtung gesehen im Gegenuhrzeigersinn. In negativer Y-Richtung betrachtet, also mit Blick auf die in Fahrtrichtung linke Fahrzeugseite (in Deutschland die Fahrerseite), verschwenken die Lenker 11, 12 bei dieser Dachbewegung im Uhrzeigersinn.

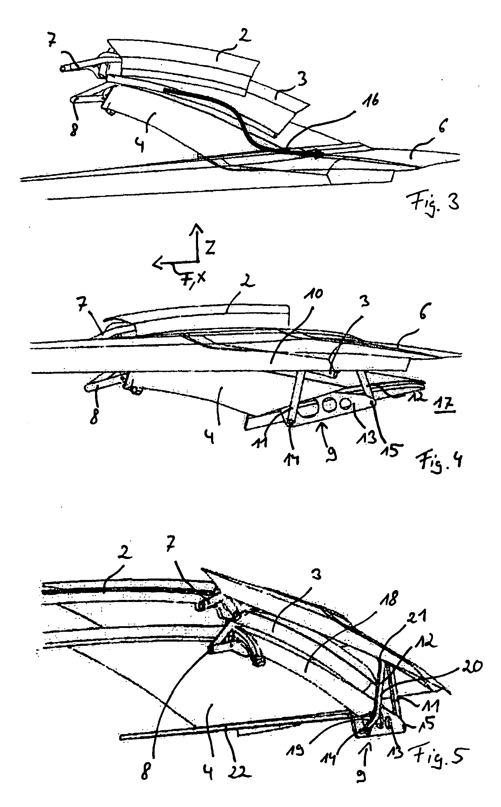

In Fig. 5 ist die Ablageposition gemäß Fig. 4 von vorne unten dargestellt. Zu erkennen ist, dass der hintere Lenker 11 der Dachkinematik 9 kürzer ist als der vordere Lenker 12. Der hintere Lenker 11 ist vollkommen gerade ausgebildet. Demgegenüber ist der vordere Lenker 12 zweifach gekröpft, wobei in Fig. 5 besonders deutlich die Kröpfung im unteren Bereich ersichtlich ist. Von dem Drehgelenk 14 an der Konsole 13 aus betrachtet, verläuft der Lenker 12 zunächst schräg nach oben und gleichzeitig in Richtung Fahrzeugaußenseite. Hierdurch wird der Lenker 11 um das hintere Dachteil 4 bzw. die C-Säule 18 des hinteren Dachteils 4 herum geführt. An diesen unteren gekröpften Abschnitt 19 schließt sich ein gerade nach oben verlaufender Abschnitt 20 des vorderen Lenkers 11 an, welcher im oberen Bereich in einen nach innen gekröpften Bereich 21 übergeht. Wie deutlich aus Fig. 5 hervorgeht, ist das untere Dachteil in Ablageposition im Dachteilpaket zuunterst abgelegt. Unmittelbar oberhalb des hinteren Dachteils 4 ist das mittlere Dachteil 3 abgelegt. Das vordere Dachteil 2 befindet sich an oberster Stelle. Das vordere Dachteil 2 ragt, wie in Fig. 4 ersichtlich ist, auch in Ablageposition aus dem Verdeckkasten 17 heraus und bildet in Ablageposition eine Hutablage.

In Fig. 5 ist zu erkennen, dass eine separate Hutablage 22 für die Schließposition vorgesehen ist. Diese separate Hutablage 22 verläuft in Fahrzeugquerrichtung und ist drehfest mit der Konsole 13 verbunden. Die separate Hutablage 22 verläuft parallel zu den in Fig. 5 nicht eingezeichneten Drehachsen der Dachkinematik 9.

In Fig. 5 ist weiterhin zu erkennen, dass die Konsole 13 fest mit der C-Säule 18 des hinteren Dachteils 4 verbunden ist. Die Anlenkung des vorderen Lenkers 11 und des hinteren Lenkers 12 der Dachkinematik 9 erfolgt also an der der Dachaußenseite gegenüberliegenden Dachunterseite. In Schließposition wird der vordere Lenker 12 von der C-Säule 18 von oben verdeckt.

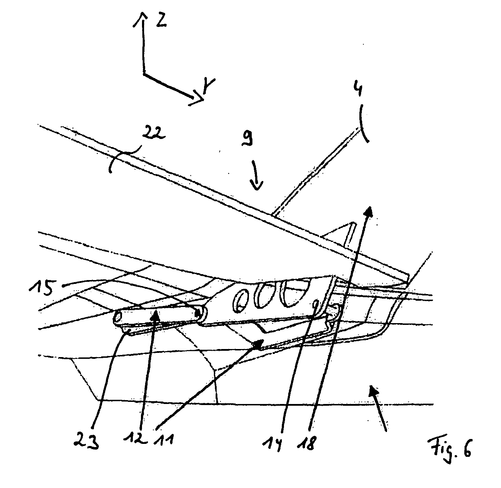

In Fig. 6 ist die Dachkinematik 9 mit ihren beiden Lenkern 11, 12 in Schließposition dargestellt. Dabei ist die linke Dachkinematik 9 aus einer Ansicht vom Fahrzeuginnenraum her dargestellt. Die Konsole 13 ist fest mit der C-Säule 18 des hinteren Dachteils 4 verbunden. In Fahrzeugquerrichtung erstreckt sich die separate Hutablage 22, die nur in der dargestellten Schließposition ihre Funktion wahrnimmt. Die Hutablage 22 wird zusammen mit dem hinteren Dachteil 4 in den Verdeckkasten 17 abgelegt. Die beiden Lenker 11, 12 sind karosserieseitig an einem Träger 23 angelenkt. Die Lenker 11, 12 der Dachkinematiken 9 stellen die einzige Verbindung zwischen dem hinteren Dachteil 4 und der Fahrzeugkarosserie 10 dar.

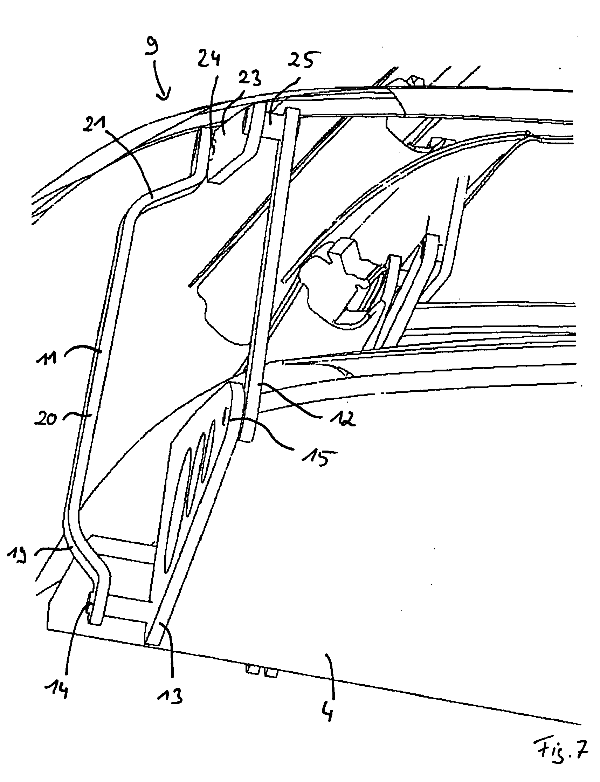

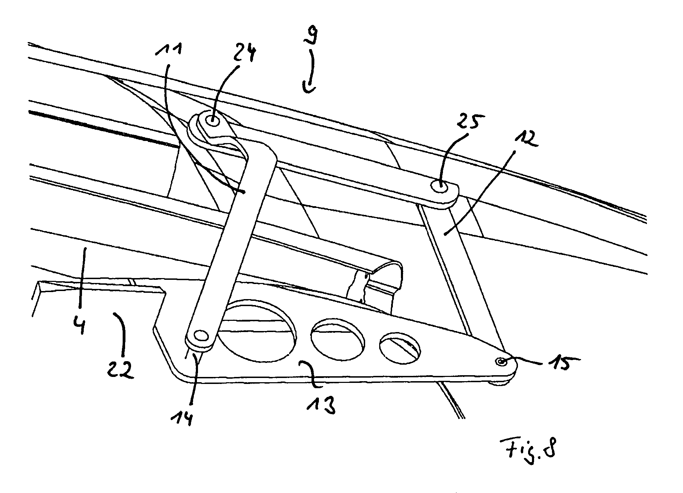

In den Fig. 7 bis 9 ist die Dachkinematik 9 in Ablageposition in verschiedenen Ansichten dargestellt. Bei der dargestellten Dachkinematik 9 handelt es sich in allen drei Figuren um die auf der in Fahrtrichtung linken Fahrzeugseite angeordnete Dachkinematik 9. Insbesondere in Fig. 7 ist die doppelt gekröpfte Form des vorderen Lenkers 11 zu erkennen. Der Lenker 11 weist einen mittleren, geraden Lenkerabschnitt 20 auf. Dieser ist in seinem unteren Bereich 19 nach innen in Richtung Konsole 13 abgekröpft ausgebildet. Im oberen Bereich des Lenkers 11 befindet sich ein ebenfalls nach innen gekröpfter Abschnitt 21. Mit seinem in der Zeichnungsebene oberen Ende ist der vordere Lenker 11 an der Außenseite des karosseriefesten Trägers 23 angelenkt. Auf der Innenseite des Trägers 23 ist der hintere, gerade Lenker angelenkt. Das Drehgelenk zwischen vorderem Lenker 11 und Träger 23 ist mit dem Bezugszeichen 24 gekennzeichnet, das Drehgelenk zwischen dem hinteren Lenker 12 und dem Träger 23 trägt das Bezugszeichen 25. Bei der Verschwenkung von der in Fig. 7 dargestellten Ablageposition in die in Fig. 1 dargestellte Schließposition müssen die Lenker 11, 12 um die karosseriefesten Drehgelenke 24, 25 in der Ansicht gemäß Fig. 7 nach vorne verschwenkt werden. Seitlich betrachtet, beispielsweise in der Ansicht gemäß Fig. 8 bedeutet dies, dass die beiden Lenker 11, 12 um die Drehgelenke 24, 25 im Uhrzeigersinn verschwenkt werden.

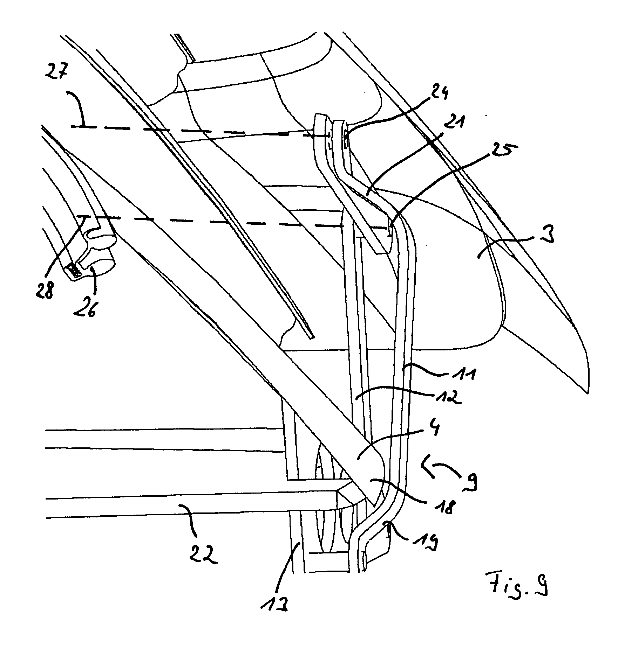

In Fig. 9 ist die Dachkinematik 9 von vorne unten dargestellt. Zu erkennen ist die in Fahrzeugquerrichtung verlaufende Dichtung 26 zur Abdichtung des hinteren Dachteils 4 gegenüber dem mittleren Dachteil 3 in Schließposition. Zu erkennen ist weiterhin, dass das mittlere Dachteil 3 in Ablageposition oberhalb der Drehgelenke 24, 25 und damit auch oberhalb des Trägers 23 abgelegt ist. Aus Fig. 9 wird auch der spezielle, doppelt gekröpfte Konturverlauf des vorderen Lenkers 11 der Dachkinematik 9 deutlich. In Fig. 9 sind die in Fahrzeugquerrichtung verlaufenden, parallelen Drehachsen 27, 28, um die die beiden Lenker 11, 12 der Dachkinematik 9 verschwenkbar sind, strichliert angedeutet. In Fig. 9 ist zu erkennen, dass der vordere Lenker 11 mittels des unteren gekröpften Abschnitts 19 an der C-Säule 18 des hinteren Dachteils 4 vorbei geführt ist. Auf den oberen gekröpften Abschnitt 21 kann verzichtet werden, wenn der Träger 23 in der Zeichnungsebene weiter rechts angeordnet wird.

## Patentansprüche

1. Fahrzeug mit einem verstellbaren Fahrzeugdach (1) mit mindestens einem starren Dachteil (2, 3, 4), das über eine Dachkinematik (9) mit mindestens einem Lenker (11, 12) gelenkig an die Fahrzeugkarosserie (10) angebunden und mittels der Dachkinematik (9) zwischen einer Schließposition und einer Ablageposition verstellbar ist,
**dadurch gekennzeichnet,**
**dass** der Lenker (11, 12) der Dachkinematik (9) bei der Verstellung des Dachteils (2, 3, 4) von der Ablageposition in die Schließposition von außerhalb des Fahrzeugs her in Richtung auf die in Fahrtrichtung linke Fahrzeugseite schauend betrachtet um eine in Fahrzeugquerrichtung verlaufende Drehachse (27, 28) im Uhrzeigersinn verschwenkbar ist.

2. Fahrzeug nach Anspruch 1,
**dadurch gekennzeichnet,**
**dass** das Dachteil (2,3, 4) in Ablageposition in einen Verdeckkasten (17) mit Verdeckkastendeckel (6) abgelegt ist.

3. Fahrzeug nach Anspruch 2,
**dadurch gekennzeichnet,**
**dass** der Verdeckkastendeckel (6) während der Verstellbewegung des Dachteil (2, 3, 4) von der Schließposition in die Ablageposition und/oder von der Ablageposition in die Schließposition geschlossen ist.

4. Fahrzeug nach einem der Ansprüche 2 oder 3,
**dadurch gekennzeichnet,**
**dass** der Verdeckkastendeckel (6) an der Fahrzeugkarosserie angelenkt ist und ausschließlich derart zu öffnen ist, dass der Verdeckkastendeckel (6) mit der Fahrzeuglängsachse einen sich in Richtung Fahrzeugheck vergrößernden Winkel einschließt.

5. Fahrzeug nach Anspruch 2,
**dadurch gekennzeichnet,**
**dass** der Verdeckkastendeckel (6) unbeweglich angeordnet ist.

6. Fahrzeug nach einem der vorhergehenden Ansprüche,
**dadurch gekennzeichnet,**
**dass** das Dachteil (2, 3, 4) zumindest teilweise im Bereich einer hinteren Sitzreihe ablegbar ist.

7. Fahrzeug nach einem der vorhergehenden Ansprüche,
**dadurch gekennzeichnet,**
**dass** der Lenker (11, 12) an der Unterseite des Dachteils 2, 3, 4), insbesondere an der C-Säule (18), vorzugsweise über eine Konsole (13), angelenkt ist.

8. Fahrzeug nach einem der vorhergehenden Ansprüche,
**dadurch gekennzeichnet,**
**dass** an dem Dachteil (2, 3, 4) mindestens ein weiteres Dachteil (2, 3, 4) mittels einer Relativkinematik (7, 8) angelenkt ist.

9. Fahrzeug nach Anspruch 8,
**dadurch gekennzeichnet,**
**dass** die Dachteile (2, 3, 4) in Ablageposition ein Dachteilpaket bilden.

10. Fahrzeug nach einem der vorhergehenden Ansprüche,
**dadurch gekennzeichnet,**
**dass** das über die Dachkinematik (9) gelenkig mit der Fahrzeugkarosserie (10) verbundene Dachteil (2, 3, 4) das hintere Dachteil (4) ist.

11. Fahrzeug nach einem der vorhergehenden Ansprüche,
**dadurch gekennzeichnet,**
**dass** das hintere Dachteil (4) in Ablageposition im Dachteilpaket zuunterst mit noch oben gerichteter Dachteilaußenseite abgelegt ist.

12. Fahrzeug nach einem der vorhergehenden Ansprüche,
**dadurch gekennzeichnet,**
**dass** ein Dachteil (2, 3, 4), vorzugsweise das vordere Dachteil (2), in Ablageposition zuoberst abgelegt ist und eine Hutablage bildet.

13. Fahrzeug nach einem der vorhergehenden Ansprüche,
**dadurch gekennzeichnet,**
**dass** eine starr mit dem hinteren Dachteil (4) verbundene Hutablage (22) vorgesehen ist.

14. Fahrzeug nach einem der vorhergehenden Ansprüche,
**dadurch gekennzeichnet,**
**dass** die Dachkinematik (9) als Viergelenkkinematik mit einem vorderen und einem hinteren Lenker (11, 12) ausgebildet ist, und dass beide Lenker (11, 12) bei der Verstellbewegung des Dachteils (2, 3, 4) von der Ablageposition in die Schließposition von außerhalb des Fahrzeugs her in Richtung auf die in Fahrtrichtung linke Fahrzeugseite schauend betrachtet im Uhrzeigersinn verschwenkbar sind.

15. Fahrzeug nach Anspruch 14,
**dadurch gekennzeichnet,**
**dass** ein Lenker (11, 12) der Viergelenkkinematik, vorzugsweise der hintere Lenker (12), gerade ausgebildet ist.

16. Fahrzeug nach einem der Ansprüche 14 oder 15,
**dadurch gekennzeichnet,**
**dass** ein Lenker (11, 12) der Viergelenkkinematik, vorzugsweise der vordere Lenker (11), in Fahrzeugquerrichtung gekröpft ausgebildet ist.
